# EUROPÄISCHE PATENTSCHRIFT

(11) **EP 3 548 335 B1**
(45) Veröffentlichungstag und Bekanntmachung des Hinweises auf die Patenterteilung: **16.11.2022**
(21) Anmeldenummer: 18707281.4
(22) Anmeldetag: 13.02.2018
(51) Int. Cl.: B60Q 1/08

(54) **STEUERN EINES STEUERBAREN SCHEINWERFERS EINES KRAFTFAHRZEUGS**
CONTROLLING A CONTROLLABLE HEADLIGHT OF A MOTOR VEHICLE
COMMANDE D'UN FEU AVANT COMMANDABLE D'UN VÉHICULE AUTOMOBILE

(30) Priorität: 15.02.2017 DE 102017202459
(43) Veröffentlichungstag der Anmeldung: 09.10.2019
(73) Patentinhaber: Audi AG, 85045 Ingolstadt (DE)
(72) Erfinder: REIM, Johannes, 85072 Eichstätt (DE); OMERBEGOVIC, Said, 65933 Frankfurt (DE)
(74) Vertreter: Hofstetter, Schurack & Partner
(86) Internationale Anmeldenummer: PCT/EP2018/053500
(87) Internationale Veröffentlichungsnummer: WO 2018/149805

(56) Entgegenhaltungen:
- EP-A1- 3 118 515
- EP-A2- 2 965 946
- DE-A1- 10 164 193
- DE-A1- 19 713 884
- DE-A1-102009 009 472
- DE-A1-102011 078 288
- DE-A1-102015 107 086
- GB-A- 2 517 790
- JP-A- H11 240 377
- JP-A- 2007 182 151
- US-A1- 2014 267 415

## Beschreibung

Die Erfindung betrifft ein Verfahren zum Steuern eines steuerbaren Scheinwerfers eines Kraftfahrzeugs, bei dem der Scheinwerfer derart gesteuert wird, dass auf einem Verkehrsweg, auf dem das Kraftfahrzeug geführt wird, eine vorgebbare Lichtverteilung bereitgestellt wird, wobei ein Verlauf des Verkehrswegs ermittelt und eine Lichtabgabe des Scheinwerfers abhängig vom ermittelten Verlauf des Verkehrswegs eingestellt wird, um die vorgebbare Lichtverteilung bereitzustellen. Die Erfindung betrifft auch eine Vorrichtung zum Steuern eines steuerbaren Scheinwerfers eines Kraftfahrzeugs, wobei die Vorrichtung ausgebildet ist, den steuerbaren Scheinwerfer zum Bereitstellen einer vorgebbaren Lichtverteilung auf einem Verkehrsweg, auf dem das Kraftfahrzeug geführt wird, mittels eines Signals zu steuern, einen Verlauf des Verkehrswegs zu ermitteln und eine Lichtabgabe des Scheinwerfers abhängig vom ermittelten Verlauf des Verkehrswegs einzustellen, um die vorgebbare Lichtverteilung bereitzustellen. Schließlich betrifft die Erfindung auch ein Kraftfahrzeug.

Verfahren zum Steuern von steuerbaren Scheinwerfern bei Kraftfahrzeugen, Vorrichtungen hierfür sowie auch Kraftfahrzeuge mit solchen Vorrichtungen sind im Stand der Technik umfänglich bekannt. So offenbart beispielsweise die DE 197 13 884 A1 ein Verfahren zur Regelung von Leuchtweite und/oder Leuchtrichtung bei Scheinwerfern von Kraftfahrzeugen. Sensoren sammeln Informationen über das Kraftfahrzeug und seine Umgebung und aufgrund dieser Informationen soll eine aktuelle Scheinwerfereinstellung der Scheinwerfer vorausschauend den Anforderungen für die Ausleuchtung der Fahrbahn angepasst werden können.

Auch wenn sich diese Lehre dem Grunde nach bewährt hat, so erweist sie sich doch dahingehend als nachteilig, als dass mit den Scheinwerfern des Kraftfahrzeugs nicht nur die Fahrbahn selbst beleuchtet wird, sondern die Beleuchtungswirkung über die Fahrbahn insbesondere seitlich hinausragt. Dies kann zu unerwünschter Blendwirkung führen, beispielsweise bezüglich Personen, Radfahrern und/oder dergleichen auf einem Seitenstreifen, entgegenkommender Fahrzeugen und/oder dergleichen. Die Lehre der DE 197 13 884 A1 erlaubt hier lediglich eine begrenzte Verbesserung hinsichtlich der Ausleuchtung ohne eine geeignete Anpassung.

Darüber hinaus offenbart die DE 10 2013 219 097 A1 ein Verfahren zur Steuerung einer Ausleuchtung einer Fahrspur. Mittels eines Scheinwerfers eines Kraftfahrzeugs wird von einem Leuchtelement Licht gemäß einer Lichtverteilung emittiert, wobei die Lichtverteilung als adaptierte Lichtverteilung anhand eines vertikalen Verlaufs der Fahrspur relativ zum Scheinwerfer in Abhängigkeit einer Entfernung variiert werden soll. Dies betrifft jedoch lediglich die Leuchtweite und berücksichtigt nicht etwaige seitliche Begrenzungen bezüglich einer Lichtemission, die gegebenenfalls auch eine Blendwirkung zur Folge haben könnte.

In diesem Zusammenhang ist auch die DE 19716 784 B4 zu nennen, die eine Scheinwerferanlage für Fahrzeuge offenbart. Diese Lehre ist darauf gerichtet, vorausfahrende Fahrzeuge nicht zu stark zu beleuchten, sodass eine Blendung eines Fahrers des vorausfahrenden Fahrzeugs vermieden werden kann.

Ferner offenbart in diesem Zusammenhang auch die DE 10 2008 061 747 A1 ein Verfahren und ein System zum Anpassen eines Fahrzeugs. Mittels einer Assistenzeinrichtung soll ein Fahrhinweis erzeugt werden, der ein von einem Fahrzeugbediener durchzuführendes Fahrmanöver betrifft. Nach Maßgabe des Fahrhinweises soll eine von einer Beleuchtungseinrichtung des Kraftfahrzeugs erzeugte Lichtverteilung oder ein Erfassungsbereich eines Umfeldsensors des Kraftfahrzeugs angepasst werden können.

Schließlich offenbart die DE 590 399 C einen Spurlichtprojektor für Kraftfahrzeuge. Mit dem Spurlichtprojektor sollen seitlich scharf begrenzte Lichtstreifen projiziert werden können, die trotz einer durch Scheinwerfer des Kraftfahrzeugs erzeugten Beleuchtung gut sichtbar sein sollen.

Bei gegenwärtigen Scheinwerfersystemen ist es bekannt, ein dynamisches Kurvenlicht vorzusehen, das die Lichtverteilung bei Kurvenfahrten zur Kurveninnenseite hin verschiebt. Die Nutzung von Daten eines Kamerasystems, das eine Fahrspur zu erkennen vermag, kann eine vorausschauende Ansteuerung des Kurvenlichts ermöglichen. Zwar kann durch den Einsatz von hochauflösenden Scheinwerfersystemen eine präzisere Ausleuchtung der Fahrbahn ermöglicht werden, um den Fahrer des Kraftfahrzeugs bei Kurvenfahrten, aber auch auf gerader Strecke, zu unterstützen, jedoch wird die eigene Fahrspur, auf der das Kraftfahrzeug vom Fahrer geführt wird, nicht zusätzlich beleuchtet. Dies erweist sich gerade bei Kurvenfahrten als besonders nachteilig, weil bei Dunkelheit unbeleuchtet oder lediglich schwach beleuchtete Bereiche der Fahrspur entstehen, sodass für den Fahrer des Kraftfahrzeugs ein erhöhtes Gefahrenpotential entstehen kann.

Ferner offenbart die JP 2007-182151 A einen Fahrzeugfrontscheinwerfer und ein Verfahren zu dessen Steuerung. Die EP 3 118 515 A1 offenbart einen Fahrzeugscheinwerfer und ein Fahrzeugscheinwerfersteuerungssystem. Die GB 2517790 A offenbart ein Fahrzeug mit einem System zum Anzeigen. Die DE 10 2011 078 288 A1 offenbart ein Kraftfahrzeug mit einer Warneinrichtung für den Fahrer. Die DE 10 2015 107 086 A1 offenbart einen hochauflösenden Scheinwerfer für ein Fahrzeug zur Anpassung von Lichtverteilungen bei Kurvenfahrten. Schließlich offenbaren die DE 10 2009 009 472 A1, die DE 10 2015 201 764 A1 und die DE 10 2014 000 935 A1 ein Verfahren zum Unterstützen eines Fahrers eines Fahrzeugs und ein Fahrassistenzsystem für ein Fahrzeug.

Der Erfindung liegt die Aufgabe zugrunde, das Steuern eines steuerbaren Scheinwerfers zu verbessern und ein entsprechendes Verfahren sowie eine entsprechende Vorrichtung und ein Kraftfahrzeug anzugeben.

Als Lösung werden mit der Erfindung ein Verfahren, eine Vorrichtung sowie ein Kraftfahrzeug gemäß den unabhängigen Ansprüchen vorgeschlagen.

Weitere vorteilhafte Ausgestaltungen ergeben sich anhand von Merkmalen der abhängigen Ansprüche.

Erfindungsgemäß wird vorgesehen, dass die Lichtverteilung mittels einer Mehrzahl von Pixeln eines Pixelscheinwerfers als steuerbarer Scheinwerfer bereitgestellt wird, zu welchem Zweck die pixelbildenden Leuchtelemente individuell hinsichtlich ihrer Lichtabgabe gesteuert werden, ein Bereich des Verkehrswegs in Fahrtrichtung vor dem Kraftfahrzeug ermittelt wird, der für ein Befahren durch das Kraftfahrzeug bestimmt und entsprechend seitlich begrenzt ist, und die Leuchtelemente derart gesteuert werden, dass mit der vorgebbaren Lichtverteilung ausschließlich der Bereich beleuchtet wird.

Vorrichtungsseitig wird erfindungsgemäß vorgesehen, dass der die Lichtverteilung bereitstellende Scheinwerfer ein eine Mehrzahl von Pixeln aufweisender Pixelscheinwerfer ist, wobei die Pixel durch Leuchtelemente gebildet sind, die individuell hinsichtlich ihrer Lichtabgabe steuerbar sind, wobei die Vorrichtung ferner ausgebildet ist, einen Bereich des Verkehrswegs in Fahrtrichtung vor dem Kraftfahrzeug zu ermitteln, der für ein Befahren durch das Kraftfahrzeug bestimmt und entsprechend seitlich begrenzt ist, und die Leuchtelemente zum ausschließlichen Beleuchten des Bereichs entsprechend der vorgebbaren Lichtverteilung zu steuern.

Kraftfahrzeugseitig wird erfindungsgemäß vorgesehen, dass das Kraftfahrzeug eine Vorrichtung gemäß der Erfindung umfasst. Die Erfindung basiert auf dem Gedanken, dass bei einem Kraftfahrzeug, welches einen Pixelscheinwerfer aufweist, eine verbesserte Ausleuchtung des Fahrwegs, insbesondere einer Fahrspur einer Fahrbahn des Fahrwegs, erreicht werden kann. Anders als es zum Beispiel gemäß der Lehre der DE 197 13 884 A1 möglich ist, kann hierdurch erreicht werden, dass die Beleuchtung des Verkehrswegs auf den Teil begrenzt wird, der für das Befahren durch das Kraftfahrzeug bestimmt ist. Die Erfindung erlaubt es also, die Lichtverteilung so auf den Bereich zu begrenzen, dass das Licht im Wesentlichen nicht über den Bereich hinaus zum Beleuchten abgegeben wird.

Dadurch kann nicht nur eine effiziente Lichtnutzung erreicht werden, weil das emittierte Licht im Wesentlichen lediglich für die Beleuchtung des Bereichs zur Verfügung steht und darüber hinaus andere Bereiche nicht beleuchtet zu werden brauchen, sondern es kann darüber hinaus auch eine nahezu beliebige Anpassung der Ausleuchtung des Bereichs des Fahrwegs erreicht werden, insbesondere wenn der Bereich variierende Konturen, insbesondere seitlich variierende Konturen, umfasst, wie sie beispielsweise bei Kurven, aber auch bei veränderlichen Verkehrswegbreiten und/oder dergleichen auftreten können.

Anders als im Stand der Technik kann so zum Beispiel erreicht werden, dass bei Kurvenfahrten nicht nur ein Bereich ausgeleuchtet wird, in den das Kraftfahrzeug beim Durchfahren der Kurve hineinfährt, sondern es kann darüber hinaus auch vorzugsweise ein Bereich ausgeleuchtet werden, der aufgrund eines Durchfahrens der Kurve ansonsten nicht ausgeleuchtet werden würde, beispielsweise an einer Kurvenaußenseite oder dergleichen. Durch die Erfindung ist es also möglich, eine deutlich präzisere Ausleuchtung des Verkehrswegs, insbesondere des Bereichs, erreichen zu können.

Der Pixelscheinwerfer ist vorzugsweise ein Scheinwerfer, bei dem die Mehrzahl der Pixel nach Art einer Matrix angeordnet ist. Jedes Pixel ist durch ein Leuchtelement gebildet, welches mittels eines in der Regel elektrischen Signals hinsichtlich seiner Lichtemission beziehungsweise Lichtabgabe gesteuert werden kann. Die Steuerung der Leuchtelemente erfolgt individuell voneinander, sodass nahezu beliebige Lichtverteilungen mittels des Pixelscheinwerfers bereitgestellt werden können. Der Pixelscheinwerfer kann zu diesem Zweck Leuchtelemente in Form von Leuchtdioden aufweisen, die entsprechend angeordnet sind und mittels einer scheinwerferseitigen Steuereinheit hinsichtlich ihrer Lichtabgabe gesteuert werden können. Darüber hinaus kann der Pixelscheinwerfer natürlich auch durch einen Laserscanner oder dergleichen gebildet sein, bei dem ein Konversionsstoff von einem Laserstrahl zum Beispiel zeilenartig, punktartig und/oder dergleichen bestrahlt wird und der Konversionsstoff entsprechend Licht abgibt. Der Konversionsstoff stellt somit die einzelnen Pixel des Pixelscheinwerfers bereit. Bei einem derartigen Scheinwerfer kann es darüber hinaus vorgesehen sein, dass die Pixel nahezu grenzenlos ineinander übergehen, beispielsweise aufgrund einer entsprechenden Ansteuerung durch den Laser.

Die Lichtabgabe des Pixelscheinwerfers kann mittels seiner Steuerung erfolgen. Zu diesem Zweck kann die Steuerung selbst einen Steueranschluss aufweisen, über den mittels eines Signals eine entsprechende Lichtverteilung vorgegeben werden kann, die mittels des Pixelscheinwerfers abgegeben werden soll. Ein entsprechendes Signal kann mittels der Vorrichtung der Erfindung bereitgestellt werden. Die Vorrichtung der Erfindung ist deshalb dazu bestimmt, mit einem derartigen Pixelscheinwerfer zusammenzuwirken, damit die gewünschte Lichtverteilung gemäß der Erfindung vorgegeben werden kann und auch mittels des Pixelscheinwerfers entsprechend als Lichtverteilung abgegeben werden kann.

Der Bereich des Verkehrswegs ist ein Bereich, der für das Befahren durch das Kraftfahrzeug bestimmt ist. Entsprechend ergeben sich seitliche Begrenzungen des Bereichs dadurch, dass eine Breite des Bereichs quer zu einer Fahrtrichtung des Kraftfahrzeugs größer ist, als die Breite des Kraftfahrzeugs selbst. Der Bereich ist ein Abschnitt einer Fahrbahn in Längsrichtung beziehungsweise eine Fahrspur der Fahrbahn in Längsrichtung. Der Abschnitt wird durch eine Strecke in Fahrtrichtung vor dem Kraftfahrzeug gebildet, die von einem Fahrer des Kraftfahrzeugs visuell erfasst werden kann und/oder mittels eines geeigneten Sensors, beispielsweise eines Kamerasystems oder dergleichen, erfasst werden kann. Der Bereich kann auch durch seitliche Markierungen sowie auch durch einen Seitenrand des Verkehrswegs seitlich begrenzt sein. Eine Markierung zur seitlichen Begrenzung des Bereichs kann beispielsweise ein Mittelstreifen einer Straße sein, die wenigstens zwei Fahrspuren umfasst, die mittels des Mittelstreifens als Fahrbahnmarkierung visuell voneinander getrennt sind. Der Bereich ist in Fahrtrichtung vor dem Kraftfahrzeug angeordnet und kann entsprechend mittels geeigneter Sensoren ermittelt werden. Er ist für ein Befahren durch Kraftfahrzeuge in Fahrtrichtung ausschließlich vorgesehen. In Fahrtrichtung des Kraftfahrzeugs ist der Bereich durch eine Sichtbarkeit für den Fahrer und/oder eine Erfassbarkeit durch den Sensor begrenzt.

Die vorgebbare Lichtverteilung wird derart ermittelt, dass die Leuchtelemente des Pixelscheinwerfers so gesteuert werden, dass mit der vorgebbaren Lichtverteilung ausschließlich der Bereich beleuchtet wird. Außerhalb des Bereichs erfolgt im Wesentlichen keine Beleuchtung. Der beleuchtete Bereich braucht dem Grunde nach keine geraden Seitenbegrenzungen zu umfassen. Je nach Verlauf des Verkehrswegs beziehungsweise der Fahrbahn beziehungsweise der Fahrspur kann der Bereich seitlich auch gekrümmt sein beispielsweise wenn sich der Bereich in eine Kurve hineinerstreckt oder dergleichen.

Es wird eine Krümmung des Verkehrswegs und/oder eine Anfangskrümmung und/oder eine Krümmungsänderung der Markierung des Verkehrswegs berücksichtigt. Dadurch kann der Verlauf des Verkehrswegs auf einfache Weise erfasst werden und die Erfindung besonders vorteilhaft genutzt werden. Zum Erfassen der Krümmung beziehungsweise der Markierung kann ein Kamerasystem, Radarsystem, ein Infrarotsystem und/oder dergleichen genutzt werden.

Der Verlauf des Verkehrswegs kann unter Nutzung einer Datenbank ermittelt werden, beispielsweise unter Nutzung eines kraftfahrzeugseitigen Navigationssystems, einer kraftfahrzeugexternen Datenbank, die zum Beispiel über eine drahtlose Kommunikationsverbindung kontaktiert werden kann, und/oder dergleichen.

Die Vorrichtung kann zum Zwecke der erfindungsgemäßen Verfahrensführung eine Hardware-Schaltung und/oder eine mittels eines geeigneten Rechnerprogramms steuerbare Rechnereinheit umfassen, um die erforderlichen Auswertungen und Berechnungen durchführen zu können.

Das Kraftfahrzeug ist vorzugsweise ein Kraftwagen, insbesondere ein Personenkraftwagen. Das Kraftfahrzeug wird ferner vorzugsweise durch einen Fahrer geführt. Darüber hinaus kann natürlich auch ein automatisiertes Führen des Kraftfahrzeugs vorgesehen sein, insbesondere ein autonomes Führen des Kraftfahrzeugs.

Gemäß einer Weiterbildung wird vorgeschlagen, dass die Lichtelemente derart gesteuert werden, dass die vorgebbare Lichtverteilung auf eine vorgegebene Strecke in Fahrtrichtung vor dem Kraftfahrzeug begrenzt wird. Dadurch kann der Bereich nach vorne vor dem Kraftfahrzeug begrenzt werden. Die vorgegebene Strecke kann beispielsweise eine Entfernung vom Kraftfahrzeug in Fahrtrichtung sein. Die Strecke kann beispielsweise etwa 50 m oder auch weniger sein. Vorzugsweise ist die vorgegebene Strecke einstellbar, beispielsweise abhängig von einem ermittelten Verlauf des Verkehrswegs, einer Einstellung durch einen Fahrer oder eine Steuerung, die das Kraftfahrzeug autonom führt, und/oder dergleichen. Die vorgegebene Strecke kann somit während der Fahrt des Kraftfahrzeugs auch variiert werden, um beispielsweise bedarfsgerecht Anpassungen hinsichtlich der Beleuchtung des Verkehrswegs vornehmen zu können. Gegebenenfalls kann die vorgegebene Strecke natürlich auch größer als etwa 50 m sein, beispielsweise etwa 100 m, etwa 150 m oder dergleichen. Es kann auch ein Bereich für eine vorgegebene Strecke vorgegeben sein, innerhalb dessen die vorgegebene Strecke während der Fahrt des Kraftfahrzeugs variiert werden kann.

Es wird ferner vorgeschlagen, dass die vorgebbare Lichtverteilung in Echtzeit an einen veränderten Verlauf des Verkehrswegs angepasst wird. Bei dieser Ausgestaltung wird vorzugsweise der Verlauf des Verkehrswegs kontinuierlich erneut ermittelt und Veränderungen für das Verfahren der Erfindung unmittelbar berücksichtigt. Dadurch kann auch die vorgebbare Lichtverteilung entsprechend angepasst werden, wenn dies der veränderte Verlauf des Verkehrswegs erfordert. Die Erfindung schlägt vor, dies in Echtzeit zu tun, sodass vorteilhaft eine unverzügliche Anpassung der vorgebbaren Lichtverteilung ermöglicht ist. Dadurch kann die Funktion der Erfindung weiter verbessert werden.

Gemäß einer Weiterbildung vorgeschlagen, dass zum Ermitteln der vorgebbaren Lichtverteilung ein Gierwinkel und/oder ein Nickwinkel des Kraftfahrzeugs berücksichtigt wird. Dadurch können Effekte, die sich aufgrund des bestimmungsgemäßen Betriebs des Kraftfahrzeugs während der Fahrt einstellen können, ergänzend berücksichtigt werden, um die Lichtverteilung entsprechend anpassen zu können. So kann beispielsweise vorgesehen sein, dass Auswirkungen aufgrund eines Gierens beim Durchfahren einer Kurve entsprechend ausgeglichen werden können. Darüber hinaus kann auch vorgesehen sein, dass ein Nickwinkel beim Abbremsen des Kraftfahrzeugs vor einer Kurve berücksichtigt wird, um weiterhin, insbesondere unabhängig vom Nickwinkel eine vorgebbare Beleuchtung des Bereichs des Verkehrswegs erreichen zu können. Dies gilt natürlich gleichermaßen auch für den Gierwinkel.

Darüber hinaus wird vorgeschlagen, dass der Gierwinkel und/oder der Nickwinkel in Bezug auf eine Markierung des Verkehrswegs ermittelt wird. Auf diese Weise kann der Gierwinkel sowie gegebenenfalls auch der Nickwinkel besonders zuverlässig ermittelt werden. Die Markierung des Verkehrswegs kann beispielsweise ein Mittelstreifen, ein Seitenstreifen, jegliche andere Markierung und/oder dergleichen sein.

Darüber hinaus besteht natürlich die Möglichkeit, den Verlauf des Verkehrswegs anhand von Daten einer Datenbank zu ermitteln. Dies kann beispielsweise die Nutzung einer Datenbank eines Navigationssystems des Kraftfahrzeugs umfassen. Darüber hinaus kann natürlich auch vorgesehen sein, dass eine entfernte zentrale Datenbank geeignete Daten bereitstellt. Vorzugsweise wird zu dieser Datenbank eine drahtlose Kommunikationsverbindung, beispielsweise über ein Mobilfunknetz und/oder dergleichen genutzt.

Eine Weiterbildung schlägt vor, dass zum Ermitteln der vorgebbaren Lichtverteilung eine Sichtweite einer Spurerkennung für eine Fahrspur des Verkehrswegs berücksichtigt wird, auf der das Kraftfahrzeug geführt wird. Die Sichtweite kann ebenfalls mittels eines geeigneten optischen Sensors erfasst werden, vorzugsweise mit einem Kamerasystem oder dergleichen. Dadurch kann die vorgebbare Lichtverteilung in geeigneter Weise an die jeweilige Sichtweite angepasst werden, beispielsweise wenn die Sichtweite aufgrund von Niederschlag oder dergleichen beeinträchtigt ist.

Weiterhin wird vorgeschlagen, dass zum Ermitteln des Verlaufs eine Nachbildung der Fahrspur des Verkehrswegs in einer Projektionsebene ermittelt wird, um den Bereich zu ermitteln. Bei der Projektionsebene handelt es sich um eine virtuelle Ebene, die in einem Rechnersystem zur Verfügung steht und zum Ermitteln des Verlaufs des Verkehrswegs herangezogen werden kann. Mittels eines geeigneten Algorithmus kann dann eine Rechnereinheit der Vorrichtung den Verlauf unter Nutzung einer Nachbildung der Fahrspur des Verkehrswegs in der Projektionsebene ermitteln. Dadurch lässt sich auf einfache Weise der Bereich ermitteln, um die Lichtverteilung für den Bereich vorgeben zu können.

Die für das erfindungsgemäße Verfahren angegebenen Vorteile und Wirkungen gelten gleichermaßen für die erfindungsgemäße Vorrichtung sowie das mit der erfindungsgemäßen Vorrichtung ausgerüstete Kraftfahrzeug und umgekehrt.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: eine schematische Darstellung eines auf einer Fahrbahn eines Verkehrswegs geführten Kraftfahrzeugs mit Pixelscheinwerfern, die gemäß der Erfindung gesteuert werden, gemäß einer ersten Ausgestaltung; und
- Fig. 2: eine schematische Darstellung eines auf einer Fahrbahn eines Verkehrswegs geführten Kraftfahrzeugs mit Pixelscheinwerfern, die gemäß der Erfindung gesteuert werden, gemäß einer zweiten Ausgestaltung.

Bei den im Folgenden erläuterten Ausführungsbeispielen handelt es sich um bevorzugte Ausführungsformen der Erfindung.

In den Figuren sind funktionsgleiche Elemente jeweils mit denselben Bezugszeichen versehen.

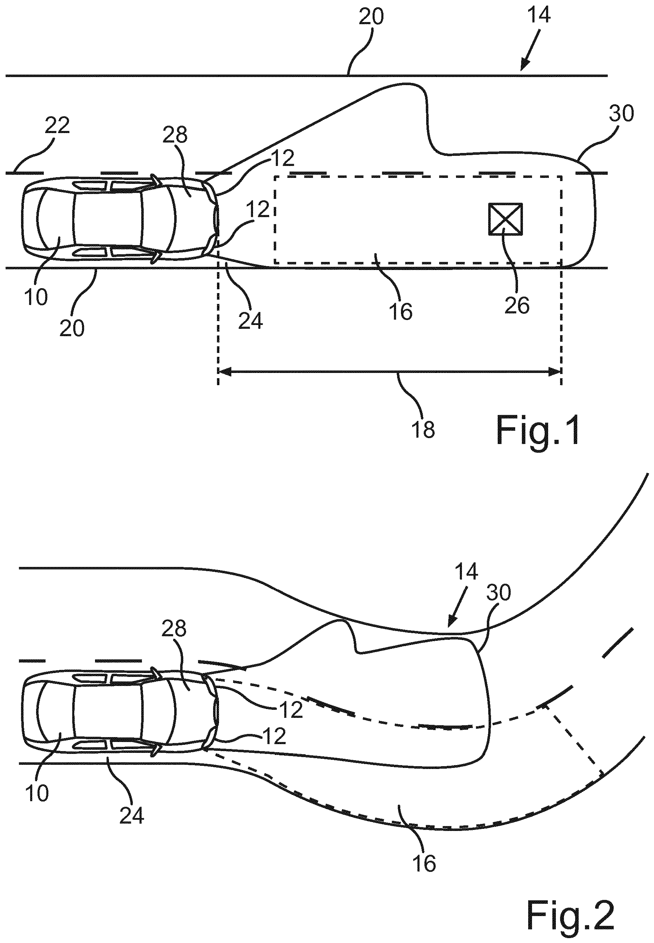

Fig. 1 zeigt in einer schematischen Darstellung eine zweispurige Straße 14 als Verkehrsweg, die eine Fahrspur 24 aufweist, auf der ein Kraftfahrzeug 10 von einem Fahrer des Kraftfahrzeugs 10 geführt ist. Die Straße 14 ist in dieser Ausgestaltung in Längsrichtung geradlinig ausgebildet. Das Kraftfahrzeug weist zwei Pixelscheinwerfer 12 auf, die steuerbare Scheinwerfer des Kraftfahrzeugs 10 bilden. Mittels einer nicht weiter dargestellten Scheinwerfersteuerung werden die Pixel des jeweiligen Pixelscheinwerfers 12 gesteuert, um eine vorgebbare Lichtverteilung bereitzustellen. Die Pixelscheinwerfer sind vorliegend auf Basis von einer Leuchtdiodenmatrix ausgebildet. Alternativ kann an dieser Stelle auch ein Laserscanner oder dergleichen vorgesehen sein.

Die Pixelscheinwerfer 12 werden vorliegend derart gesteuert, dass auf der Straße 14, insbesondere auf der Fahrspur 24, auf der das Kraftfahrzeug 10 geführt wird, die vorgebbare Lichtverteilung bereitgestellt wird. Zu diesem Zweck ist die Vorrichtung 28 vorgesehen, die an ein nicht weiter dargestelltes Kamerasystem des Kraftfahrzeugs 10 angeschlossen ist, welches Fahrbahnmarkierungen, wie Seitenlinien 20 der Straße 14 sowie eine Mittellinie 22 der Straße 14, erfassen kann. Darüber hinaus ist die Vorrichtung 28 an die nicht dargestellte Scheinwerfersteuerung der Pixelscheinwerfer 12 angeschlossen. Mittels eines Signals an die Scheinwerfersteuerung kann die Vorrichtung 28 die Pixelscheinwerfer 12 zur Bereitstellung der vorgegebenen Lichtverteilung steuern.

Mittels des Kamerasystems wird ein Verlauf der Straße 14 ermittelt. Vorliegend ist der Verlauf geradlinig. Abhängig vom ermittelten Verlauf der Straße 14 wird eine Lichtabgabe der Pixelscheinwerfer 12 eingestellt, um die vorgebbare Lichtverteilung bereitzustellen.

Die Lichtverteilung wird vorliegend durch eine Mehrzahl von Pixeln des Pixelscheinwerfers 12 bereitgestellt, zu welchem Zweck der Pixelscheinwerfer 12 pixelbildende Leuchtelemente aufweist, die hinsichtlich ihrer Lichtabgabe individuell gesteuert werden können, und zwar von der Scheinwerfersteuerung. Die Leuchtelemente sind vorliegend durch individuell steuerbare Leuchtdioden gebildet.

In der vorliegenden Ausgestaltung ist ferner vorgesehen, dass die Vorrichtung 28 zugleich auch die Scheinwerfersteuerung für die Pixelscheinwerfer sowie die Pixelscheinwerfer selbst umfasst. Hierdurch ist eine kompakte Einheit gebildet. In alternativen Ausgestaltungen können hier natürlich auch selbstverständlich zumindest teilweise separate Baugruppen vorgesehen sein, die darüber hinaus auch an unterschiedlichen Stellen des Kraftfahrzeugs 10 angeordnet sein können.

Vorliegend wird mittels der Vorrichtung 28 ein Bereich 16 der Straße 14, hier insbesondere der Fahrspur 24, ermittelt, der sich in Fahrtrichtung vor dem Kraftfahrzeug 10 erstreckt. Der Bereich 16 ist für ein Befahren durch das Kraftfahrzeug 10 bestimmt und entsprechend seitlich begrenzt. Vorliegend bestehen die seitlichen Begrenzungen durch die Mittellinie 22 und eine rechte Seitenlinie 20.

Die Leuchtelemente der Pixelscheinwerfer 12 werden derart gesteuert, dass mit der vorgebbaren Lichtverteilung ausschließlich der Bereich 16 beleuchtet wird.

Vorliegend ist ferner vorgesehen, dass die Lichtelemente derart gesteuert werden, dass die vorgebbare Lichtverteilung auf eine vorgegebene Strecke 18 in Fahrtrichtung vor dem Kraftfahrzeug begrenzt wird. Die vorgegebene Strecke beträgt vorliegend etwa 50 m.

Ferner ist vorliegend ebenfalls vorgesehen, dass der Bereich 16 nicht unmittelbar vor dem Kraftfahrzeug 10 sondern beabstandet hierzu beginnt. Dies berücksichtigt, dass der Bereich in Fahrtrichtung unmittelbar vor dem Kraftfahrzeug 10 in der Regel vom Fahrer ohnehin nicht eingesehen werden kann und deshalb eine Beleuchtung an dieser Stelle eingespart werden kann. Durch die Erfindung ist es möglich, die Lichtverteilung auf den Bereich 16 zu begrenzen und somit das durch die Pixelscheinwerfer 12 bereitgestellte Licht optimal für die Beleuchtung des Bereichs 16 zu nutzen. Dadurch kann auch ein Hindernis, wie das in Fig. 1 dargestellte Hindernis 26 im Bereich 16, sehr gut vom Fahrer des Kraftfahrzeugs 10 erfasst werden.

Aus Fig. 1 ist ersichtlich, dass gegenüber einer Beleuchtung gemäß dem Stand der Technik, die mit dem Bezugszeichen 30 dargestellt ist, eine präzisere Ausleuchtung der Fahrspur 24 erreicht werden kann.

Fig. 2 zeigt eine weitere Ausgestaltung gemäß der Erfindung, die auf der Ausgestaltung gemäß Fig. 1 basiert, weshalb ergänzend auf die diesbezüglichen Ausführungen verwiesen wird.

Im Unterschied zur Ausgestaltung gemäß Fig. 1 ist bei der Ausgestaltung gemäß Fig. 2 vorgesehen, dass die Straße 14 einen kurvigen Verlauf aufweist. Entsprechend sind auch der Verlauf der Fahrspur 24 sowie der Verlauf der Seitenlinien 20 sowie der Mittellinie 22 ausgebildet.

Mit der Vorrichtung 28 sowie dem angeschlossenen Kamerasystem kann nunmehr der Verlauf der Straße 14 und hier insbesondere der Fahrspur 24 erfasst werden. Entsprechend wird ein Bereich 16 ermittelt, der an den Verlauf der Fahrspur 24 gemäß Fig. 2 angepasst ist. Die Vorrichtung 28 erzeugt nun ein entsprechendes Steuersignal für die Scheinwerfersteuerung, sodass mit den Pixelscheinwerfern 12 eine Lichtverteilung erreicht werden kann, wie sie in Fig. 2 zum Beleuchten des Bereichs 16 dargestellt ist.

Zu erkennen ist anhand von Fig. 2, dass - entgegen dem Stand der Technik - die Beleuchtung der Fahrspur 24 in Fahrtrichtung vor dem Kraftfahrzeug 10 im Wesentlichen vollständig erfolgen kann, sodass der Fahrer des Kraftfahrzeugs 10 die Fahrspur 24, auf der er das Kraftfahrzeug 10 führen soll, vollständig beleuchtet erfassen kann.

Im Vergleich dazu ist mit dem Bezugszeichen 30 eine Fahrbahnbeleuchtung des Stands der Technik dargestellt. Deutlich erkennbar ist die hiergegenüber verbesserte Ausleuchtung der Fahrspur 24.

Die Information über die unmittelbaren Fahrbahnmarkierungen 20, 22 links und rechts vom Kraftfahrzeug 10 können mittels der Vorrichtung 28 genutzt werden, um die Begrenzung der Lichtverteilung zu ermitteln. Insbesondere kann die Entfernung der Fahrspur in Querrichtung, eine Gierwinkeldifferenz zwischen dem Kraftfahrzeug 10 und einer der Fahrbahnmarkierungen 20, 22, eine Anfangskrümmung der Fahrbahnmarkierung, eine Krümmungsänderung der Fahrbahnmarkierung, eine Sichtweite der Spurerkennung und/oder dergleichen genutzt werden.

Die Begrenzung der Lichtverteilung des hochauflösenden Scheinwerfersystems mittels der Pixelscheinwerfer 12 wird durch eine Nachbildung der Fahrspur 24 in einer Projektionsebene mittels einer Rechnereinheit der Vorrichtung 28 bestimmt. Hierzu kann zum Beispiel die Berechnung von Klothoiden oder Splines unter Verwendung von Sensordaten der vorgenannten Sensoren, insbesondere des Kamerasystems, genutzt werden. Anhand der ermittelten Begrenzung des Bereichs 16 kann die Lichtverteilung ermittelt werden, die dann erlaubt, die eigene Fahrspur 24 genau auszuleuchten.

Die Ausführungsbeispiele dienen lediglich der Erläuterung der Erfindung und sollen diese nicht beschränken. Insbesondere kann natürlich die Gestaltung des Bereichs, der beleuchtet werden soll, im Rahmen des Gegenstandes der Ansprüche variiert werden. Darüber hinaus kann die Vorrichtung natürlich auch in eine bestehende Fahrzeugsteuerung des Kraftfahrzeugs 10 integriert sein. Beispielsweise kann die Vorrichtung auch dadurch realisiert sein, dass eine Rechnereinheit der Fahrzeugsteuerung gemäß einem Rechnerprogramm gesteuert wird, welches die Funktion der Erfindung realisiert.

## Patentansprüche

1. Verfahren zum Steuern eines steuerbaren Scheinwerfers (12) eines Kraftfahrzeugs (10), bei dem der Scheinwerfer (12) derart gesteuert wird, dass auf einem Verkehrsweg (14), auf dem das Kraftfahrzeug (10) geführt wird, eine vorgebbare Lichtverteilung bereitgestellt wird, wobei
- ein Verlauf des Verkehrswegs (14) ermittelt wird,
- eine Lichtabgabe des Scheinwerfers (12) abhängig vom ermittelten Verlauf des Verkehrswegs (14) eingestellt wird, um die vorgebbare Lichtverteilung bereitzustellen, und
- die Lichtverteilung mittels einer Mehrzahl von Pixeln eines Pixelscheinwerfers als steuerbarer Scheinwerfer (12) bereitgestellt wird, zu welchem Zweck die Pixel bildende Leuchtelemente individuell hinsichtlich ihrer Lichtabgabe gesteuert werden,
wobei
- ein Bereich (16) des Verkehrswegs (14) in Fahrtrichtung vor dem Kraftfahrzeug (10) ermittelt wird, wobei der Bereich (16) ein Abschnitt einer Fahrspur (24) einer Fahrbahn in Längsrichtung ist, wobei der Abschnitt durch eine Strecke in Fahrtrichtung vor dem Kraftfahrzeug gebildet ist, die von einem Fahrer des Kraftfahrzeugs visuell erfasst wird und/oder mittels eines geeigneten Sensors erfasst wird und wobei der Bereich (16) für ein Befahren durch das Kraftfahrzeug (10) bestimmt und entsprechend seitlich begrenzt ist, zu welchem Zweck eine Krümmung des Verkehrswegs (14) und/oder eine Anfangskrümmung und/oder eine Krümmungsänderung einer Markierung (20, 22) des Verkehrswegs (14) berücksichtigt wird, und **dadurch gekennzeichnet, dass**
- die Leuchtelemente derart gesteuert werden, dass mit der vorgebbaren Lichtverteilung ausschließlich der Bereich (16) beleuchtet wird, sodass die Beleuchtung der Fahrspur (24) der Fahrbahn des Verkehrswegs (14) in Fahrtrichtung vor dem Kraftfahrzeug (10) vollständig erfolgt.

2. Verfahren nach Anspruch 1,
**dadurch gekennzeichnet, dass**
die Lichtelemente derart gesteuert werden, dass die vorgebbare Lichtverteilung auf eine vorgegebene Strecke (18) in Fahrtrichtung vor dem Kraftfahrzeug (10) begrenzt wird.

3. Verfahren nach einem der vorhergehenden Ansprüche,
**dadurch gekennzeichnet, dass**
die vorgebbare Lichtverteilung in Echtzeit an einen veränderten Verlauf des Verkehrswegs (14) angepasst wird.

4. Verfahren nach einem der vorhergehenden Ansprüche,
**dadurch gekennzeichnet, dass**
zum Ermitteln der vorgebbaren Lichtverteilung ein Gierwinkel und/oder ein Nickwinkel des Kraftfahrzeugs (10) berücksichtigt wird.

5. Verfahren nach Anspruch 4,
**dadurch gekennzeichnet, dass**
der Gierwinkel und/oder der Nickwinkel in Bezug auf die Markierung (20, 22) des Verkehrswegs (14) ermittelt wird.

6. Verfahren nach einem der vorhergehenden Ansprüche,
**dadurch gekennzeichnet, dass**
zum Ermitteln der vorgebbaren Lichtverteilung eine Sichtweite einer Spurerkennung für eine Fahrspur (24) des Verkehrswegs (14) berücksichtigt wird, auf der das Kraftfahrzeug (10) geführt wird.

7. Verfahren nach Anspruch 6,
**dadurch gekennzeichnet, dass**
zum Ermitteln des Verlaufs eine Nachbildung der Fahrspur (24) des Verkehrswegs (14) in einer Projektionsebene ermittelt wird, um den Bereich (16) zu ermitteln.

8. Vorrichtung (28) zum Steuern eines steuerbaren Scheinwerfers (12) eines Kraftfahrzeugs (10), wobei die Vorrichtung (28) ausgebildet ist,
- den steuerbaren Scheinwerfer (12) zum Bereitstellen einer vorgebbaren Lichtverteilung auf einem Verkehrsweg (14), auf dem das Kraftfahrzeug (10) geführt wird, mittels eines Signals zu steuern,
- einen Verlauf des Verkehrswegs (14) zu ermitteln,
- eine Lichtabgabe des Scheinwerfers (12) abhängig vom ermittelten Verlauf des Verkehrswegs (14) einzustellen, um die vorgebbare Lichtverteilung bereitzustellen, und
- der die Lichtverteilung bereitstellende Scheinwerfer (12) ein eine Mehrzahl von Pixeln aufweisender Pixelscheinwerfer ist, wobei die Pixel durch Leuchtelemente gebildet sind, die individuell hinsichtlich ihrer Lichtabgabe steuerbar sind, wobei
- die Vorrichtung (28) ferner ausgebildet ist, einen Bereich (16) des Verkehrswegs (14) in Fahrtrichtung vor dem Kraftfahrzeug (10) zu ermitteln, wobei der Bereich (16) ein Abschnitt einer Fahrspur (24) der Fahrbahn in Längsrichtung ist, wobei der Abschnitt durch eine Strecke in Fahrtrichtung vor dem Kraftfahrzeug gebildet ist, die von einem Fahrer des Kraftfahrzeugs visuell erfassbar ist und/oder mittels eines geeigneten Sensors erfassbar ist und wobei der Bereich (16) für ein Befahren durch das Kraftfahrzeug (10) bestimmt und entsprechend seitlich begrenzt ist, indem die Vorrichtung (28) eine Krümmung des Verkehrswegs (14) und/oder eine Anfangskrümmung und/oder eine Krümmungsänderung einer Markierung (20, 22) des Verkehrswegs (14) berücksichtigt, und
**dadurch gekennzeichnet, dass**
- die Leuchtelemente zum ausschließlichen Beleuchten des Bereichs (16) entsprechend der vorgebbaren Lichtverteilung zu steuern, sodass die Beleuchtung der Fahrspur (24) der Fahrbahn des Verkehrswegs (14) in Fahrtrichtung vordem Kraftfahrzeug (10) vollständig erfolgt.

9. Kraftfahrzeug (10),
**gekennzeichnet durch**
eine Vorrichtung (28) nach Anspruch 8.

## Claims

1. A method for controlling a controllable headlight (12) of a motor vehicle (10), in which the headlight (12) is controlled such that a presettable light distribution is provided on a traffic route (14), on which the motor vehicle (10) is driven, wherein
- a course of the traffic route (14) is ascertained,
- a light emission of the headlight (12) is adjusted depending on the ascertained course of the traffic route (14) to provide the presettable light distribution, and
- the light distribution is provided by means of a plurality of pixels of a pixel headlight as the controllable headlight (12), for which purpose lighting elements forming the pixels are individually controlled with respect to their light emission,
wherein
- an area (16) of the traffic route (14) in direction of travel in front of the motor vehicle (10) is ascertained, wherein the area (16) is a section of a lane (24) of a roadway in longitudinal direction, wherein the section is formed by a distance in direction of travel in front of the motor vehicle, which is visually captured by a driver of the motor vehicle and/or is captured by means of a suitable sensor, and wherein the area (16) is intended for traveling by the motor vehicle (10) and correspondingly laterally bounded, for which purpose a curvature of the traffic route (14) and/or an initial curvature and/or a curvature change of a marking (20, 22) of the traffic route (14) are taken into account, and **characterized in that**
- the lighting elements are controlled such that exclusively the area (16) is illuminated with the presettable light distribution such that the illumination of the lane (24) of the roadway of the traffic route (14) is completely effected in direction of travel in front of the motor vehicle (10).

2. The method according to claim 1,
**characterized in that**
the light elements are controlled such that the presettable light distribution is limited to a preset distance (18) in direction of travel in front of the motor vehicle (10).

3. The method according to any one of the preceding claims,
**characterized in that**
the presettable light distribution is adapted to a changed course of the traffic route (14) in real time.

4. The method according to any one of the preceding claims,
**characterized in that**
a yaw angle and/or a pitch angle of the motor vehicle (10) are taken into account for ascertaining the presettable light distribution.

5. The method according to claim 4,
**characterized in that**
the yaw angle and/or the pitch angle are ascertained with respect to the marking (20, 22) of the traffic route (14).

6. The method according to any one of the preceding claims,
**characterized in that**
a visibility range of a lane detection for a lane (24) of the traffic route (14), on which the motor vehicle (10) is driven, is taken into account for ascertaining the presettable light distribution.

7. The method according to claim 6,
**characterized in that**
a replication of the lane (24) of the traffic route (14) in a projection plane is ascertained for ascertaining the course in order to ascertain the area (16).

8. A device (28) for controlling a controllable headlight (12) of a motor vehicle (10), wherein the device (28) is configured
- to control the controllable headlight (12) for providing a presettable light distribution on a traffic route (14), on which the motor vehicle (10) is driven, by means of a signal,
- to ascertain a course of the traffic route (14),
- to adjust a light emission of the headlight (12) depending on the ascertained course of the traffic route (14) to provide the presettable light distribution, and
- the headlight (12) providing the light distribution is a pixel headlight comprising a plurality of pixels, wherein the pixels are formed by lighting elements, which are individually controllable with respect to their light emission,
wherein
- the device (28) is further configured to ascertain an area (16) of the traffic route (14) in direction of travel in front of the motor vehicle (10), wherein the area (16) is a section of a lane (24) of the roadway in longitudinal direction, wherein the section is formed by a distance in direction of travel in front of the motor vehicle, which can be visually captured by a driver of the motor vehicle and/or can be captured by means of a suitable sensor, and wherein the area (16) is intended for traveling by the motor vehicle (10) and is correspondingly laterally bounded, in that the device (28) takes into account a curvature of the traffic route (14) and/or an initial curvature and/or a curvature change of a marking (20, 22) of the traffic route (14), and
**characterized in that**
- to control the lighting elements for exclusively illuminating the area (16) corresponding to the presettable light distribution such that the illumination of the lane (24) of the roadway of the traffic route (14) is completely effected in direction of travel in front of the motor vehicle (10).

9. A motor vehicle (10)
**characterized by**
a device (28) according to claim 8.

## Revendications

1. Procédé permettant de commander un phare pouvant être commandé (12) d'un véhicule automobile (10), dans lequel le phare (12) est commandé de telle sorte qu'une distribution de lumière prédéfinissable est fournie sur une voie de circulation (14) sur laquelle est conduit le véhicule automobile (10), dans lequel
- un tracé de la voie de circulation (14) est déterminé,
- une émission de lumière du phare (12) est réglée en fonction du tracé déterminé de la voie de circulation (14) afin de fournir la distribution de lumière prédéfinissable, et
- la distribution de lumière est fournie au moyen d'une pluralité de pixels d'un phare à pixels faisant office de phare pouvant être commandé (12), des éléments lumineux formant les pixels étant à cet effet commandés quant à leur émission de lumière, dans lequel
- une zone (16) de la voie de circulation (14) dans le sens de la marche devant le véhicule automobile (10) est déterminée, la zone (16) étant une partie d'une voie (24) d'une chaussée dans la direction longitudinale, la partie étant formée par un trajet dans le sens de la marche devant le véhicule automobile et qui est détecté visuellement par un conducteur du véhicule automobile et/ou est détecté au moyen d'un capteur approprié, et dans lequel la zone (16) est destinée à être parcourue par le véhicule automobile (10) et est délimitée latéralement de façon adéquate, une courbure de la voie de circulation (14) et/ou une courbure initiale et/ou une variation de courbure d'un marquage (20, 22) de la voie de circulation (14) étant pris en compte à cet effet, et
**caractérisé en ce que**
- les éléments lumineux sont commandés de telle sorte que la distribution de lumière prédéfinissable n'éclaire que la zone (16) de sorte que l'éclairage de la voie (24) de la chaussée de la voie de circulation (14) est effectué entièrement dans le sens de la marche devant le véhicule automobile (10).

2. Procédé selon la revendication 1, **caractérisé en ce que** les éléments lumineux sont commandés de telle sorte que la distribution de lumière prédéfinissable est limitée à un trajet prédéfini (18) dans le sens de la marche devant le véhicule automobile (10).

3. Procédé selon l'une quelconque des revendications précédentes, **caractérisé en ce que** la distribution de lumière prédéfinissable est adaptée en temps réel à un tracé modifié de la voie de circulation (14).

4. Procédé selon l'une quelconque des revendications précédentes, **caractérisé en ce que** pour la détermination de la distribution de lumière prédéfinissable, un angle de lacet et/ou un angle de tangage du véhicule automobile (10) est/sont pris en considération.

5. Procédé selon la revendication 4, **caractérisé en ce que** l'angle de lacet et/ou l'angle de tangage est/sont déterminé(s) par rapport au marquage (20, 22) de la voie de circulation (14).

6. Procédé selon l'une quelconque des revendications précédentes, **caractérisé en ce que** pour la détermination de la distribution de lumière prédéfinissable, une distance de visibilité d'une détection de voie pour une voie (24) de la voie de circulation (14) sur laquelle est conduit le véhicule automobile (10) est prise en considération.

7. Procédé selon la revendication 6, **caractérisé en ce que** pour la détermination du tracé une simulation de la voie (24) de la voie de circulation (14) est déterminée dans un plan de projection afin de déterminer la zone (16) .

8. Dispositif (28) permettant de commander un phare pouvant être commandé (12) d'un véhicule automobile (10), le dispositif (28) étant réalisé pour
- commander au moyen d'un signal le phare pouvant être commandé (12) afin de fournir une distribution de lumière prédéfinissable sur une voie de circulation (14) sur laquelle est conduit le véhicule automobile (10),
- déterminer un tracé de la voie de circulation (14),
- régler une émission de lumière du phare (12) en fonction du tracé déterminé de la voie de circulation (14) afin de fournir la distribution de lumière prédéfinissable, et
- le phare (12) fournissant la distribution de lumière étant un phare à pixels présentant une pluralité de pixels, les pixels étant formés par des éléments lumineux qui peuvent être commandés individuellement quant à leur émission de lumière, dans lequel
- le dispositif (28) est en outre réalisé pour déterminer une zone (16) de la voie de circulation (14) dans le sens de la marche devant le véhicule automobile (10), la zone (16) étant une partie d'une voie (24) de la chaussée dans la direction longitudinale, la partie étant formée par un trajet dans le sens de la marche devant le véhicule automobile qui peut être détectée visuellement par un conducteur du véhicule automobile et/ou peut être détectée au moyen d'un capteur approprié, et dans lequel la zone (16) est destinée à être parcourue par le véhicule automobile (10) et est délimitée latéralement de façon adéquate, en ce que le dispositif (28) prend en considération une courbure de la voie de circulation (14) et/ou une courbure initiale et/ou une variation de courbure d'un marquage (20, 22) de la voie de circulation (14), et
**caractérisé en ce que**
- les éléments lumineux sont commandés pour n'éclairer que la zone (16) selon la distribution de lumière prédéfinissable de sorte que l'éclairage de la voie (24) de la chaussée de la voie de circulation (14) est effectué entièrement dans le sens de la marche devant le véhicule automobile (10).

9. Véhicule automobile (10), **caractérisé par** un dispositif (28) selon la revendication 8.
